# EUROPÄISCHE PATENTANMELDUNG

(11) **EP 1 044 865 A2**
(43) Veröffentlichungstag der Anmeldung: **18.10.2000**
(21) Anmeldenummer: 00107434.3
(22) Anmeldetag: 06.04.2000
(51) Int. Cl.: B62D 25/24, B60P 7/08

(54) **Einrichtung zur Bereitstellung einer Öffnung in einer Oberfläche eines Transportmittels und Fahrzeug bzw. Gerät**

(30) Priorität: 15.04.1999 US 292490
(71) Anmelder: DEERE & COMPANY, Moline, Illinois 61265-8098 (US)
(72) Erfinder: Shambeau, Thomas Allen, Beaver Dam, WI 53916 (US); Hansen, Loren Fredrick, Lincoln, NE 68505 (US)
(74) Vertreter: Magin, Ludwig Bernhard

(57) **Zusammenfassung**

Einrichtung (30) zur Bereitstellung einer Öffnung (28) in einer Oberfläche eines Transportmittels, die bei Bedarf verschlossen werden kann. Darüber hinaus wird ein Fahrzeug (10) bzw. Gerät mit einer solchen Einrichtung (30) vorgeschlagen.

## Beschreibung

Die Erfindung betrifft eine Einrichtung zur Bereitstellung einer Öffnung in einer Oberfläche eines Transportmittels zum Hindurchführen wenigstens eines Tragmittels, sowie ein Fahrzeug bzw. Gerät.

Nutzfahrzeuge, wie beispielsweise Baufahrzeuge, Transportfahrzeuge oder Krankentransportfahrzeuge werden oftmals an schwer zugänglichen Einsatzorten abseits von Straßen etc. eingesetzt. Um ein Fahrzeug an solch einen Einsatzort zu bringen, kann es notwendig sein, daß das Fahrzeug auf andere Weise als mittels seines eigenen Antriebs transportiert wird. Dies kann auch bei einem Verladen von Fahrzeugen beispielsweise auf Schiffe oder andere Transportmittel etc. notwendig sein, wenn eine Zufahrt über eine Laderampe nicht möglich oder schwierig ist.

Die US-A-3,021,166 zeigt eine Verladeeinrichtung für Lastkraftwagen, bei der der Lastkraftwagen über eine Aufhängeeinrichtung an einen Ladekran angehängt wird. Die Aufhängeeinrichtung greift an Ladebügeln an, die an einem Rahmen des Lastkraftwagens unterhalb einer Ladefläche vorgesehen sind. Während eines Transports des Lastkraftwagens liegen diese Ladebügel an unteren Kanten der Ladefläche an, wodurch auf diese große Kräfte ausgeübt werden.

Die US-A-5,378,094 zeigt einen Lastkraftwagen der mit Aufnahmebolzen ausgestattet ist, an denen Gurte einer Aufhängeeinrichtung angreifen können. Die Aufnahmebolzen sind unterhalb einer Ladefläche angeordnet, wobei in der Ladefläche oberhalb der Aufnahmebolzen Öffnungen vorgesehen sind, durch die die Gurte hindurchgeführt werden können, um an den Aufnahmebolzen zum Transport des Lastkraftwagens befestigt zu werden. Die Aufnahmebolzen sind Umwelteinflüssen Ungeschützt ausgesetzt und auf der Ladefläche angeordnete Gegenstände bzw. Materialien können in die Öffnungen eintreten bzw. hineinfallen.

Das der Erfindung zugrunde liegende Problem wird darin gesehen, daß bekannte Einrichtungen dazu neigen, zu verschmutzen und durch Umwelteinflüsse beschädigt zu werden und ein Verladen von mit solchen Einrichtungen ausgestatteten Fahrzeugen bzw. Geräten erschwert wird.

Dieses Problem wird erfindungsgemäß durch die Lehre der Patentansprüche 1 bzw. 10 gelöst, wobei in den weiteren Patentansprüchen die Lösung in vorteilhafter Weise weiterentwickelnde Merkmale aufgeführt sind.

Auf diese Weise kann die Öffnung verschlossen werden, wenn sie nicht benötigt wird und geöffnet werden, wenn ein oder mehrere Tragmittel durch sie hindurchgeführt oder eingesetzt werden sollen. Bei solch einem Tragmittel kann es sich beispielsweise um flexible oder starre Mittel zum Befestigen von Ladung an dem Transportmittel oder zur Befestigung des Transportmittels an einem weiteren Gegenstand oder auch einem Ladehaken beispielsweise eines Krans oder Helikopters handeln. Es ist auch denkbar, daß in die Öffnung Bestandteile eines Aufbaus, beispielsweise in der Art eines Käfigs oder eines Gestänges, daß dazu geeignet ist, Ladung von einem Herabfallen von dem Transportmittel abzuhalten oder um eine Plane etc. zur Abdeckung beispielsweise von Fracht bzw. Ladegut zu tragen, eingebracht werden. Wird die Öffnung nicht benötigt bzw. nicht verwendet, so kann sie verschlossen werden, wodurch verhindert wird, daß Gegenstände, beispielsweise Bestandteile einer Fracht bzw. Ladung in die Öffnung eindringen und diese beschädigen, verstopfen oder selbst durch diese hindurch verloren oder beschädigt werden können.

Die Öffnung könnte durch einen Bauteil, beispielsweise in der Art eines Stopfens, verschlossen werden, der vorzugsweise zumindest mit der Einrichtung unverlierbar verbunden ist. Besonders günstig ist es aber, eine Klappe vorzusehen, die die Öffnung zumindest im wesentlichen verschließen kann, wenn sie nicht benötigt wird, und die die Öffnung ebenso zumindest im wesentlichen freigeben kann, wenn ein Tragmittel durch sie hindurch geführt wird. Es ist denkbar, die Klappe verschiebbar vorzusehen, indem beispielsweise an der Einrichtung eine oder mehrere Führungen vorgesehen sind. Besonders vorteilhaft und einfach ist es aber, eine verschwenkbare Klappe vorzusehen, da eine Schwenklagerung relativ unempfindlich gegenüber Verschmutzen ist und geringere Anforderungen an die Fertigung bzw. Montage stellt.

Es ist denkbar, daß die Schwenkachse bezogen auf die Oberfläche horizontal bzw. im wesentlichen horizontal ausgebildet ist, so daß die Klappe zu einem Freigegeben der Öffnung von dieser weg verschwenkt werden kann. Wird aber eine zumindest annähernd senkrecht stehende Schwenkachse vorgesehen, so kann die Klappe in einer zu der Öffnung vorzugsweise wenigstens annähernd parallelen Ebene bewegt werden, wodurch nur ein geringer Bauraum zur Verfügung stehen muß und die Klappe in geöffneter Stellung nur eine geringe Angriffsfläche dafür bietet, durch äußere Einflüsse verbogen zu werden.

Das Transportmittel kann beispielsweise eine Palette, eine Gitterbox, eine Hubkiste, ein Container oder ein ähnliches Mittel sein, wobei es sich bei der Oberfläche um die vorzugsweise obere Außenfläche des Transportmittels oder aber um eine Ladefläche desselben handeln kann. Wird eine erfindungsgemäße Einrichtung an einem Fahrzeug oder Arbeitsgerät eingesetzt, so ist es möglich, die Haltemittel während eines üblichen Gebrauchs des Fahrzeugs abzudecken, wodurch dieser Gebrauch nicht behindert wird und eine geschlossene Oberfläche zur Verfügung gestellt wird. Bei einem Fahrzeug kann es sich um ein Fahrzeug zur Personen- bzw. Frachtbeförderung, beispielsweise um ein Nutzfahrzeug, wie ein Baufahrzeug, ein forstwirtschaftliches Fahrzeug - oder ein landwirtschaftliches Arbeitsfahrzeug, wie ein Ackerschlepper oder eine Erntemaschine, oder auch um ein Fahrzeug zur Rasen-, Garten- bzw. Grundstückspflege handeln. Transportfahrzeuge können beispielsweise Krankentransportfahrzeuge oder Fahrzeuge unterschiedlicher Art, die vorzugsweise eine Ladefläche aufweisen, wie Lastkraftwagen und (Pick-up) Trucks sein. Solche Fahrzeuge können sowohl für zivile wie auch militärische Zwecke verwendet werden. Bei Arbeitsgeräten kann es sich beispielsweise um landwirtschaftliche, bauwirtschaftliche oder industrielle Geräte handeln.

Ist an dem Transportmittel ein Haltemittel vorgesehen, daß vorzugsweise in der Nähe bzw. bezogen auf die Oberfläche unterhalb der Öffnung angeordnet ist, so kann das Tragmittel mit diesem Haltemittel verbunden werden, wenn die Öffnung nicht verschlossen ist, um an diesem befestigt oder durch dieses hindurchgeführt zu werden. Ist die Öffnung hingegen verschlossen, so ist das Haltemittel vor Umwelteinflüssen, die zu einem Verschmutzen, Verrotten oder zu Beschädigungen führen könnten, geschützt. Das Haltemittel kann auch mit einem Rahmen des Transportmittels verbunden sein, der üblicherweise zur Aufnahme des Hauptgewichts des Transportmittels ausgebildet und daher besonders stabil und geeignet ist, die beispielsweise bei einem Hängetransport auftretenden Kräfte aufzunehmen.

Das Haltemittel kann als ein hakenartiges Bauteil oder in der Art einer Lasche ausgebildet sein. Einfach in der Herstellung und in robuster Weise kann es aber als ein Haltering ausgeführt sein, der vorzugsweise zumindest annähernd rund oder oval ausgeführt ist. Ist das Tragmittel als ein vorzugsweise flexibles Mittel, das Zugkräfte übertragen kann, ausgeführt, so kann dieses eine Schlaufe oder Öse aufweisen, die günstig mit dem hakenartigen Bauteil zusammenwirken kann. Ein Tragmittel kann aber auch in einfacher Weise durch den Haltering hindurchgeführt und verlascht oder anderweitig befestigt werden. Solche flexiblen Mittel können beispielsweise in der Art von Seilen, Riemen, Ketten, Gurten oder- ähnlichen Elementen, die dazu geeignet sind Zugkräfte zu übertragen und bei Nicht-Gebrauch einen geringen Platzbedarf aufzuweisen, ausgebildet sein. Es ist aber auch die Verwendung von Stangen oder ähnlichen Bauelementen denkbar.

Weist die Einrichtung ein Führungsmittel auf, das einen Kontakt zwischen der Oberfläche und dem Tragmittel zumindest weitgehend verhindert, so kann einer Beschädigung des Tragmittels, beispielsweise einem Durchscheuern eines Seils oder Riemens vorgebeugt werden. Ein solches Führungsmittel kann in der Art eines Abweisers ausgebildet sein, der an der Einrichtung selbst oder an der Oberfläche, beispielsweise im Bereich einer Kante der Öffnung, vorgesehen ist. Es ist aber auch denkbar, eine Führung in der Art einer Öse bzw. eines Abstandhalters vorzusehen.

Sind Stützmittel vorgesehen, an bzw. auf denen sich das Mittel abstützen kann, so können diese vorteilhaft sein, um das Mittel vor Beschädigungen beispielsweise in der Art eines Verbiegens zu schützen. Vorzugsweise kann sich das Mittel zumindest in einem Zustand, in dem es die Öffnung abdeckt, auf dem Stützmittel abstützen, so daß auf die Klappe bzw. das Mittel einwirkende Umwelteinflüsse bzw. Kräfte beispielsweise durch auf der Oberfläche bzw. Ladefläche angeordnete Gegenstände und/oder Materialien durch das Stützmittel aufgenommen werden können, so daß es üblicherweise zu keiner Beschädigung bzw. keinem Verbiegen des Mittels bzw. seiner Anschlußmittel, über die es mit der Einrichtung und/der dem Gegenstand in Verbindung steht, kommen kann.

An dem Stützmittel und/oder dem Mittel können Vorsprünge vorgesehen sein, die die Möglichkeit bieten können, daß eine Bedienungsperson an ihnen angreifen kann, beispielsweise um das Mittel zu bewegen, insbesondere zu verschwenken. Ist sowohl an dem Stützmittel oder auch an der Oberfläche oder dem Rahmen wie auch dem Mittel ein Vorsprung vorgesehen, wobei diese bei verschlossener Öffnung vorzugsweise wenigstens geringfügig beabstandet sind, so kann in den Spalt zwischen den Vorsprüngen ein Werkzeug oder ein anderweitig geeignetes Mittel eingebracht werden, um das Mittel im Falle eines Verklemmens oder beispielsweise korrosionsbedingten 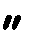 Festfressen" aufzustemmen.

Es ist günstig, eine solche Einrichtung an einem Fahrzeug oder einem Gerät vorzusehen, da dadurch die Öffnung vor Umwelteinflüssen, denen Fahrzeuge oder Geräte ausgesetzt sind, geschützt werden kann, und darüber hinaus die Funktion bzw. der Betrieb des Fahrzeugs bzw. Geräts durch die Öffnung in der Oberfläche nicht behindert wird. Bei der Oberfläche kann es sich insbesondere bei einem Fahrzeug oder Gerät, um eine Ladefläche handeln, wobei durch die Einrichtung bewirkt wird, daß die Ladefläche nicht durch Öffnungen unterbrochen wird, wenn diese nicht benötigt werden, um beispielsweise Fracht zu sichern oder wenn das Fahrzeug zu Transportzwecken an einem Ladehaken angehängt werden soll.

In der Zeichnung ist ein nachfolgend näher beschriebenes Ausführungsbeispiel der Erfindung dargestellt. Es zeigt:
- Fig. 1: ein Fahrzeug mit mehreren erfindungsgemäßen Einrichtungen,
- Fig. 2: eine teilweise Darstellung des Fahrzeugs mit einer Einrichtung,
- Fig. 3: eine vergrößerte Ansicht einer Klappe der Einrichtung und
- Fig. 4: eine vergrößerte Ansicht entsprechend Figur 3, wobei die Klappe eine Öffnung in einer Ladefläche des Fahrzeugs verschließt.

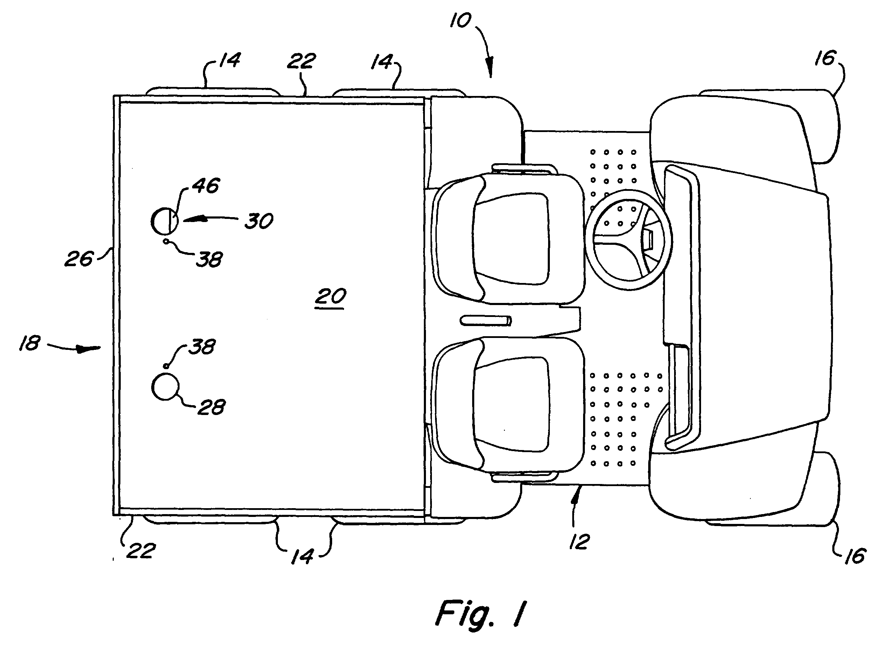

Figur 1 zeigt ein Transportfahrzeug bzw. ein Fahrzeug 10 mit einem Hauptrahmen bzw. einem Rahmen 12, der durch vier antreibbare Räder 14 und ein Paar lenkbarer, vorderer Räder 16 getragen wird. Auf dem Rahmen 12 ist an einer Stelle oberhalb der antreibbaren Räder 14 ein Ladebehälter 18 angeordnet. Der Ladebehälter 18 weist einen horizontalen Boden bzw. eine Ladefläche 20 und vertikale rechte und linke Seitenwände 22, eine Frontwand 24 und eine Ladeklappe 26 auf. Die Ladeklappe 26 bildet eine rückwärtige Wand des Ladebehälters 18 und ist vorgesehen, um eine Öffnung, die durch die rückwärtigen Kanten der Ladefläche 20 und der Seitenwände 22 gebildet wird, selektiv zu verschließen. Die Seitenwände 22 sind ebenso um horizontale Achsen schwenkbar angebracht. Auf diese Weise können die Seitenwände 22 und die Ladeklappe 26 aus geschlossenen, aufrechten Stellungen in offene, zurückgelehnte Stellungen verschwenkt werden, in denen sie wirksame Vergrößerungen der Ladefläche 20 bilden können und wodurch der Ladebehälter 18 in eine flache Ladefläche (nicht gezeigt) umgewandelt werden kann. Die Ladefläche 20 ist mit beabstandeten Öffnungen 28 ausgestattet, denen Aufhängeeinrichtungen bzw. Einrichtungen 30 zugeordnet sind.

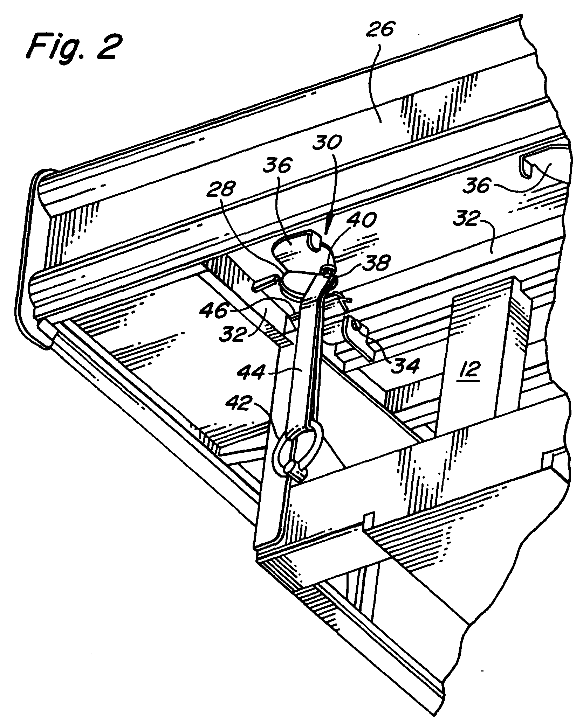

In Figur 2 wird eine rückwärtige vergrößerte Teilansicht des Fahrzeugs 10 gezeigt. Der Ladebehälter 18 weist neben der Ladefläche 20 eine Serie von Querstangen 32 auf. Die Querstangen 32 ruhen auf dem Rahmen 12 des Fahrzeugs 10. Der Ladebehälter 18 ist auf dem Rahmen 20 mittels eines Paares von axial fluchtenden Bolzen 34 (der linke Bolzen 34 wird in Figur 2 gezeigt) angebracht, welche eine Rotationsachse bilden, um die der Ladebehälter 18 schwenken kann. Die Einrichtung 30 umfaßt die Öffnung 28 in der Ladefläche 20 und eine Klappe 36, welche schwenkbar mit der Ladefläche 20 über ein Befestigungsmittel wie eine Schloßschraube 38, welche mit einer Mutter 40 zusammenwirkt, verbunden ist.

Ein schwenkbarer Ring 42 dient als ein Haltemittel, welches mit ähnlichen Haltemitteln zusammenwirkt, die an anderen Stellen um den Rahmen 12 des Fahrzeugs 10 vorgesehen sind, um Haltepunkte für ein Angreifen von Aufhängemitteln bzw. Tragmitteln wie Schnallen, Gurten bzw. Riemen 44 zur Verfügung zu stellen, so daß das Fahrzeug 10 mittels der Riemen 44 und anderer Aufhängemittel angehoben werden kann.

Die Klappe 36 wird in ihrer geöffneten Stellung (außerhalb einer Ausrichtung mit der Öffnung 28) gezeigt, so daß ein Pfad durch die Ladefläche 20 von dem Ring 42 zu einem Gebiet oberhalb des Ladebehälters 18 zur Verfügung gestellt wird. Der Riemen 44 ist durch die Öffnung 28 und durch den Ring 42 geführt, wonach der Riemen 44 zurück durch die Öffnung 28 geführt ist. Der Riemen 44 wird dann üblicherweise mit anderen Aufhängemitteln in einer zentralen Stellung (obwohl auch eine Mehrpunktaufhängung möglich ist) oberhalb des Fahrzeugs 10 verbunden und mit einem Ladehaken an einer Maschine, wie einem Helikopter (nicht gezeigt), verbunden, um das Fahrzeug 10 anzuheben und zu bewegen.

Der durch die Einrichtung 30 gebildete Durchgang durch die Ladefläche 20 umgeht die Notwendigkeit, den Riemen 44 um die Ladefläche 20 und die Ladeklappe 26 oder die Seitenwände 22 zu führen, um eine Verbindung zwischen dem Ring 42 und der zentralen Stelle oberhalb des Fahrzeugs 10 zu erzielen. Eine Verwendung der Einrichtung 30 während einer Aufhängung des Fahrzeugs 10 reduziert daher resultierende nach oben gerichtete Kräfte auf den Ladebehälter 18, da der Durchgang durch die Ladefläche 20 direkter ist als ein alternativer Weg um die Ladeklappe 26.

Wo es nicht möglich ist, einen vollständig geraden Weg von dem Ring 42 zu einer zentralen Stelle oberhalb des Fahrzeugs 10 bereitzustellen (aufgrund von Behinderungen durch den Rahmen 12 oder aus anderen Gründen), kann es wünschenswert sein, die Einrichtung 30 mit einer Führungseinrichtung 46 auszustatten, wie der, die in Form eines Stückes gebogenen Flacheisens, das an einen der Bolzen 34 angeschweißt ist, gezeigt wird. Die Führungseinrichtung 46 erstreckt sich unterhalb der Öffnung 28 (wie es aus den Figuren 1 und 2 ersehen werden kann), wobei sie einen Kontakt zwischen dem Riemen 44 und dem Material der Ladefläche 20 an den Kanten der Öffnung 28 reduziert oder eliminiert.

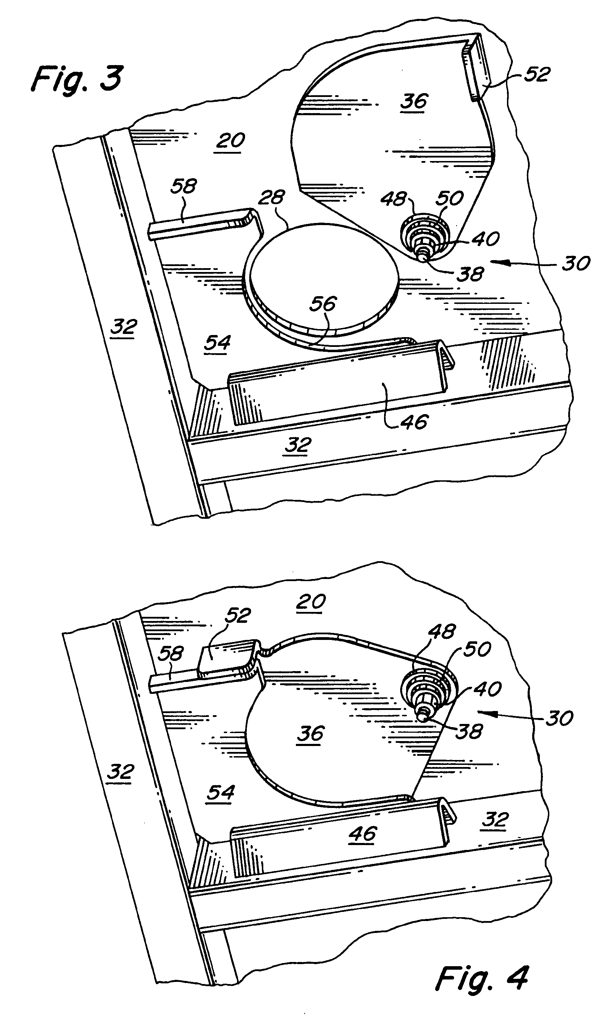

Es wird nun Figur 3 betrachtet, in der die Einrichtung 30 gezeigt wird, wenn die Klappe 36 sich in ihrer geöffneten Stellung befindet, so daß die Einrichtung 30 einen Pfad durch die Ladefläche 20 zur Verfügung stellt. Die Schloßschraube 38, um die die Klappe 36 schwenkt, ist mit einer flachen Unterlegscheibe 48 und einer Federscheibe 40 versehen. Die Federscheibe 50 stellt einen Widerstand zur Verfügung, der durch ein Anziehen der Mutter 40 verstellt werden kann, so daß eine gewünschte Menge an Anstrengung nötig ist, um die Klappe 36 zu verschwenken, um ein zufälliges Verschieben zwischen geöffneten und geschlossenen Positionen zu verhindern. Ein Vorsprung 52 erstreckt sich von der Klappe 36 nach unten, als eine bequeme Stelle für eine Bedienungsperson, um an der Klappe 36 anzugreifen, um eine gewünschte Bewegung der Klappe 36 zu bewirken.

Es wird nun auf Figur 4 Bezug genommen, in der die Einrichtung 36 in einer geschlossenen Stellung gezeigt wird, in der die Klappe 36 in Eingriff mit der Öffnung 28 verschwenkt ist und dabei die Öffnung 28 im wesentlichen verschließt. Ein Stützbügel bzw. ein Stützmittel 54, das als eine Metallplatte, die an die Querstreben 32 angeschweißt ist, ausgeführt ist, ist unterhalb der Klappe 36, die sich in ihrer geschlossenen Stellung befindet, angeordnet. Vorzugsweise ist das Stützmittel 54 derart angeordnet, daß nur eine kleine Lücke zwischen der Klappe 36 und dem Stützmittel 54 vorhanden ist, so daß, wenn ein wesentliches Gewicht von oben auf die Klappe 36 aufgebracht wird, sich die Klappe 36 auf dem Stützmittel 54 abstützen wird, um eine Überbelastung und ein Verbiegen oder Brechen der Schloßschraube 38, die die Klappe 36 an der Ladefläche 20 hält, zu verhindern. Eine innere Kontur 56 des Stützmittels 54 ist vorzugsweise derart geformt, daß das Stützmittel 54 die Öffnung 28 nicht überlappen wird oder auf andere Weise in den Betrieb der Einrichtung 30 eingreifen wird, wenn sich die Klappe 36 in einer offenen Stellung befindet. Seltene Benutzung und Witterungseinflüsse oder andere Verunreinigungen können bewirken, daß die Klappe 36 rostet oder sich anderweitig in ihrer geschlossenen Stellung festsetzt. In einer bevorzugten Ausführungsform, wird das Stützmittel 54 mit einem sich nach unten erstreckenden Vorsprung 58 ausgestattet sein. Vorzugsweise wird die Klappe 36 ihre geschlossenen Stellung einnehmen, wenn der Umfang der Klappe 36 an einer der Querstreben 32 anliegt, so daß der Vorsprung 52 und der Vorsprung 58 voneinander leicht beabstandet sind. Ein Werkzeug, wie ein Schraubendreher oder ein Stemmeisen, kann dann zwischen den Vorsprüngen 52, 58 eingesetzt werden, um die Klappe 36 auf zustemmen.

Obwohl die Erfindung mit Bezug auf die gezeigte Ausführungsform beschrieben ist, sollte es für einen Fachmann deutlich sein, daß die Erfindung in der beschriebenen wie einer modifizierten Form für eine Benutzung in anderen Anwendungsfällen nützlich sein kann. Die vorliegende Erfindung soll nicht durch die oben beschriebenen Ausführungsformen, sondern ausschließlich durch die folgenden Ansprüche begrenzt sein.

## Patentansprüche

1. Einrichtung (30) zur Bereitstellung einer Öffnung (28) in einer Oberfläche eines Transportmittels zum Hindurchführen wenigstens eines Tragmittels, gekennzeichnet durch Mittel durch die die Öffnung (28) verschließbar ist.

2. Einrichtung nach Anspruch 1, dadurch gekennzeichnet, daß die Mittel eine vorzugsweise verschwenkbare Klappe (36) aufweisen.

3. Einrichtung nach Anspruch 2, dadurch gekennzeichnet, daß die Klappe (36) eine vorzugsweise zu der Oberfläche zumindest annähernd senkrecht stehende Schwenkachse aufweist.

4. Einrichtung nach einem oder mehreren der vorherigen Ansprüche, dadurch gekennzeichnet, daß die Oberfläche eine Ladefläche (20) und/oder das Transportmittel ein Fahrzeug (10) ist.

5. Einrichtung nach einem oder mehreren der vorherigen Ansprüche, gekennzeichnet durch zumindest ein Haltemittel zum wirksamen Verbinden des Tragmittels mit dem Transportmittel bzw. einem Rahmen (12) des Transportmittels.

6. Einrichtung nach einem oder mehreren der vorherigen Ansprüche, dadurch gekennzeichnet, daß das Haltemittel in der Art eines Rings (32) ausgeführt ist und/oder daß das Tragmittel als vorzugsweise flexibles Mittel zur Übertragung von Zugkräften ausgebildet ist/sind.

7. Einrichtung nach einem oder mehreren der vorherigen Ansprüche, gekennzeichnet durch wenigstens eine Führungseinrichtung (46), die einen Kontakt zwischen der Oberfläche und dem Tragmittel zumindest weitgehend verhindert.

8. Einrichtung nach einem oder mehreren der vorherigen Ansprüche, gekennzeichnet durch zumindest ein Stützmittel (54), zur Abstützung des Mittels vorzugsweise zumindest bei abgedeckter Öffnung (28).

9. Einrichtung nach einem oder mehreren der vorherigen Ansprüche, dadurch gekennzeichnet, daß an dem Mittel und/oder dem Stützmittel (54) zumindest ein Vorsprung (52, 58) vorgesehen ist.

10. Fahrzeug (10) oder Gerät mit wenigstens einer Einrichtung (30) nach einem oder mehreren der vorherigen Ansprüche.
